# EUROPEAN PATENT APPLICATION

(11) **EP 4 765 338 A1**
(43) Date of publication of application: **24.06.2026**
(21) Application number: 25758533.1
(22) Date of filing: 05.02.2025
(51) Int. Cl.: H01M 10/63, H01M 10/617, G01N 27/02

(54) **BATTERY MANAGEMENT APPARATUS AND OPERATION METHOD THEREFOR**

(30) Priority: 20.02.2024 KR 20240024149
(71) Applicant: LG Energy Solution, Ltd., Seoul 07335 (KR)
(72) Inventor: YOON, Sun Woo, Daejeon 34122 (KR); JO, Yong Min, Daejeon 34122 (KR)
(74) Representative: Plasseraud IP
(86) International application number: PCT/KR2025/001673
(87) International publication number: WO 2025/178286

(57) **Abstract**

A battery management apparatus according to an embodiment disclosed herein includes a temperature estimation unit configured to estimate a temperature of a battery based on electrochemical impedance spectroscopy (EIS) data related to impedance of the battery, a data acquisition unit configured to acquire measurement data related to a measured temperature of the battery, and a temperature correction unit configured to correct the estimated temperature of the battery to correspond to the measured temperature of the battery based on at least one correction coefficient generated based on an error between the measured temperature of the battery according to the measurement data and the estimated temperature of the battery.

## Description

### TECHNICAL FIELD

### Cross-reference to Related Applications

This application claims priority from Korean Patent Application No. 10-2024-0024149, filed on February 20, 2024, in the Korean Intellectual Property Office, the disclosure of which is incorporated by reference herein.

### Technical Field

One embodiment disclosed herein relates to a battery management apparatus and a method of operating the same.

### BACKGROUND ART

In recent years, research and development for secondary batteries have been actively conducted. Here, the secondary battery is a battery capable of recharging and discharging, and in its meaning, includes all of the existing Ni/Cd battery, Ni/MH battery, and the like and a recent lithium-ion battery. Among secondary batteries, the lithium-ion battery has the advantage of a much higher energy density than the existing Ni/Cd battery, Ni/MH battery, and the like. In addition, since the lithium-ion battery may be manufactured to be small and lightweight, the lithium-ion battery is used as a power source for mobile devices, and in recent years, its scope of use has expanded to include power sources for electric vehicles, so that the lithium-ion battery attracts attention as a next-generation energy storage medium.

A battery management apparatus (BMS) monitors the temperature, voltage, current, and the like of the battery, and controls the operation of the battery based on the monitored battery state. Here, the temperature of the battery is an important variable affecting the performance of the battery, and the battery management apparatus needs to measure the temperature of the battery more accurately.

To this end, when a temperature sensor or the like for measuring the temperature of the battery is positioned in each battery cell, there is a problem that the internal space of the battery pack is reduced, and when the temperature of the battery is predicted through electrochemical impedance spectroscopy (EIS) of the battery pack, there is a problem that the accuracy of the predicted temperature is lowered.

### DISCLOSURE OF THE INVENTION

### TECHNICAL PROBLEM

One object of the embodiments disclosed herein is to provide a battery management apparatus that corrects the temperature of a battery predicted through EIS analysis to correspond to an actually measured temperature of the battery and a method of operating the same.

The technical problems of the embodiments disclosed herein are not limited to the technical problems mentioned above, and other technical problems not mentioned will be clearly understood by those skilled in the art to which the present invention belongs from the description below.

### TECHNICAL SOLUTION

A battery management apparatus according to an embodiment disclosed herein includes a temperature estimation unit configured to estimate a temperature of a battery based on electrochemical impedance spectroscopy (EIS) data related to impedance of the battery, a data acquisition unit configured to acquire measurement data related to a measured temperature of the battery, and a temperature correction unit configured to correct the estimated temperature of the battery to correspond to the measured temperature of the battery based on at least one correction coefficient generated based on an error between the measured temperature of the battery according to the measurement data and the estimated temperature of the battery.

According to an embodiment, the temperature correction unit may correct the estimated temperature of the battery to correspond to the measured temperature of the battery using a correction coefficient corresponding to each of a plurality of temperature sections.

According to an embodiment, the temperature correction unit may correct the estimated temperature of the battery to correspond to the measured temperature of the battery by performing offset correction by adding or subtracting to or from the estimated temperature of the battery in each of the plurality of temperature sections, an offset correction coefficient that is one of at least one correction coefficient corresponding to each of the plurality of temperature sections.

According to an embodiment, the offset correction coefficient may be determined based on an absolute value of an error between the estimated temperature of the battery and the measured temperature of the battery in each of the plurality of temperature sections.

According to an embodiment, the offset correction coefficient may correspond to an average value of the absolute values of the errors in each of the plurality of temperature sections.

According to an embodiment, the offset correction coefficient may correspond to a median value of the absolute values of the errors in each of the plurality of temperature sections.

According to an embodiment, the temperature correction unit may correct the estimated temperature of the battery to correspond to the measured temperature of the battery by substituting the estimated temperature of the battery into an equation generated based on a slope correction coefficient that is one of the at least one correction coefficient corresponding to each of the plurality of temperature sections.

According to an embodiment, the equation may be a linear function where an average rate of change of the error between the measured temperature of the battery and the estimated temperature of the battery at each of a start point and an end point of each of the plurality of temperature sections is taken as a slope.

According to an embodiment, the estimated temperature of the battery at the start point of each of the plurality of temperature sections may be corrected to correspond to the measured temperature of the battery.

According to an embodiment, the temperature correction unit may correct the estimated temperature of the battery to correspond to the measured temperature of the battery using a point correction coefficient that is one of the at least one correction coefficient, when the estimated temperature of the battery corresponds to a preset temperature.

A method of operating a battery management apparatus according to an embodiment disclosed herein includes estimating a temperature of a battery based on electrochemical impedance spectroscopy (EIS) data related to impedance of the battery, acquiring measurement data related to a measured temperature of the battery, and correcting the estimated temperature of the battery to correspond to the measured temperature of the battery based on at least one correction coefficient generated based on an error between the measured temperature of the battery according to the measurement data and the estimated temperature of the battery.

According to an embodiment, the correcting of the estimated temperature of the battery to correspond to the measured temperature of the battery may include dividing data related to the estimated temperature of the battery into a plurality of temperature sections and correcting the estimated temperature of the battery to correspond to the measured temperature of the battery using a correction coefficient corresponding to each of the plurality of temperature sections.

According to an embodiment, the correcting of the estimated temperature of the battery to correspond to the measured temperature of the battery may include performing offset correction by adding or subtracting to or from the estimated temperature of the battery in each of the plurality of temperature sections, an offset correction coefficient that is one of at least one correction coefficient corresponding to each of the plurality of temperature sections, and the offset correction coefficient may be determined based on an absolute value of an error between the estimated temperature of the battery and the measured temperature of the battery in each of the plurality of temperature sections.

According to an embodiment, the offset correction coefficient may correspond to an average value or a median value of the absolute values of the errors in each of the plurality of temperature sections.

According to an embodiment, the correcting of the estimated temperature of the battery to correspond to the measured temperature of the battery may include generating an equation based on a slope correction coefficient that is one of the at least one correction coefficient corresponding to each of the plurality of temperature sections and correcting the estimated temperature of the battery to correspond to the measured temperature of the battery by substituting the estimated temperature of the battery into the equation.

According to an embodiment, the equation may correspond to a linear function where an average rate of change of the error between the measured temperature of the battery and the estimated temperature of the battery at each of a start point and an end point of each of the plurality of temperature sections is taken as a slope, and the estimated temperature of the battery at the start point of each of the plurality of temperature sections may be corrected to correspond to the measured temperature of the battery.

### ADVANTAGEOUS EFFECTS

A battery management apparatus according to an embodiment disclosed herein can improve the accuracy of the temperature of a battery predicted through EIS analysis.

The effects according to the embodiment disclosed herein are not limited to those mentioned above, and other effects not mentioned will be clearly understood by those skilled in the art from the disclosure herein.

### BRIEF DESCRIPTION OF THE DRAWINGS

FIG. 1 is a diagram for describing a battery management apparatus according to an embodiment disclosed herein.
FIG. 2 is a view for describing temperature data according to an embodiment disclosed herein.
FIG. 3a is a view for describing offset correction according to an embodiment disclosed herein.
FIG. 3b is a view for describing offset correction according to an embodiment disclosed herein.
FIG. 4a is a view for describing slope correction according to an embodiment disclosed herein.
FIG. 4b is a view for describing slope correction according to an embodiment disclosed herein.
FIG. 5a is a view for describing point correction according to an embodiment disclosed herein.
FIG. 5b is a view for describing point correction according to an embodiment disclosed herein.
FIG. 6 is a flowchart for describing the operation of the battery management apparatus according to an embodiment disclosed herein.

### MODE FOR CARRYING OUT THE INVENTION

Hereinafter, embodiments disclosed herein will be described in detail with reference to exemplary drawings. In adding reference numerals to the components of each drawing, it should be noted that the same components are given the same reference numerals as much as possible even though they are shown on different drawings. In addition, in describing the embodiments disclosed herein, when a detailed description of a related known configuration or function is determined to hinder understanding of the embodiments disclosed herein, the detailed description thereof is omitted.

In addition, in describing a component of the embodiments disclosed herein, terms such as first, second, A, B, (a), (b), etc. may be used. These terms are only for distinguishing the component from other components, and the essence, sequence, or order of the component is not limited by the terms. In addition, unless otherwise defined, all terms used herein, including technical or scientific terms, have the same meaning as commonly understood by those of ordinary skill in the art to which the embodiments disclosed herein belong. Terms, such as those defined in commonly used dictionaries, should be interpreted as having a meaning that is consistent with their meaning in the context of the related art and will not be interpreted in an idealized or overly formal sense unless expressly so defined herein.

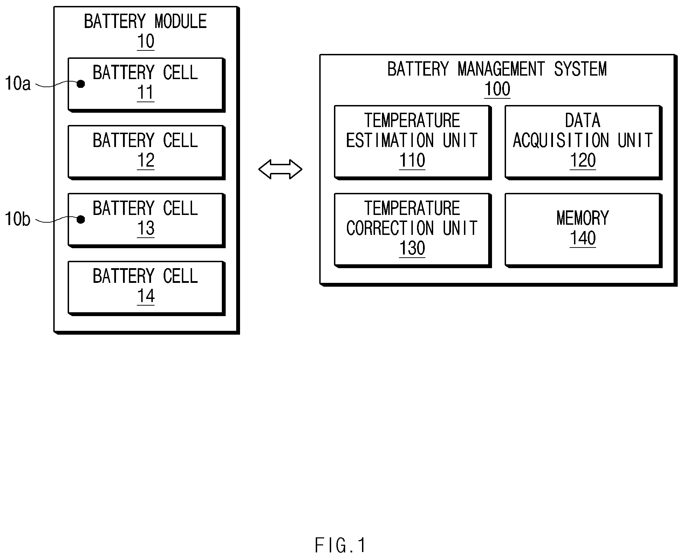

FIG. 1 is a diagram for describing a battery management apparatus according to an embodiment disclosed herein.

A battery module 10 may include a plurality of battery cells 11, 12, 13, and 14. Referring to FIG. 1, the battery module 10 is shown as including four battery cells, but is not limited thereto, and the battery module 10 may be configured to include n (n is a natural number) battery cells.

The plurality of battery cells 11, 12, 13, and 14 may be lithium ion (Li-ion) batteries, lithium ion polymer (Li-ion polymer) batteries, nickel cadmium (Ni-Cd) batteries, nickel hydrogen (Ni-H) batteries, or the like, but are not limited thereto. In addition, although FIG. 1 shows one battery module 10, a plurality of battery modules may form a battery pack (not shown) depending on the embodiment.

The battery module 10 may be connected to a target device (not shown) and supply power to the target device (not shown). To this end, the battery module 10 may be electrically connected to the target device (not shown). Here, the target device (not shown) may include an electrical, electronic or mechanical device that operates by receiving power from the battery module 10, and for example, the target device (not shown) may be an electric vehicle (EV), an electric scooter, or the like, but is not limited thereto.

Temperature sensors 10a and 10b may be attached to at least one battery cell among the plurality of battery cells 11, 12, 13, and 14 included in the battery module 10. Referring to FIG. 1, a first temperature sensor 10a is attached to a first battery cell 11 among the plurality of battery cells 11, 12, 13, and 14, and a second temperature sensor 10b is attached to a third battery cell 13, but is not limited thereto.

The temperature sensors 10a and 10b may be attached to the respective battery cells 11 and 13 and configured to measure the temperatures of the respective battery cells 11 and 13. The temperature of each of the battery cells 11 and 13 measured through the temperature sensors 10a and 10b may be provided to a battery management apparatus 100, and the battery management apparatus 100 may be configured to control the operation of the battery module 10 and/or each of the plurality of battery cells 11, 12, 13, and 14 included in the battery module 10 based on the temperature of each of the battery cells 11 and 13 measured through the temperature sensors 10a and 10b.

According to an embodiment, the temperature sensors 10a and 10b may be thermistor temperature sensor using a thermistor. Here, the thermistor is a type of thermally variable resistor that detects the temperature of a material by using the property of resistance changing with temperature, and may exhibit positive characteristics (positive temperature coefficient thermistor (PTC)) in which a resistance value increases as the temperature increases, negative characteristics (negative temperature coefficient thermistor (NCT)) in which the resistance value decreases as the temperature increases, and critical temperature resistor (CTR) characteristics in which the resistance changes in a specific temperature range. In this case, the battery management apparatus 100 may measure the temperature of each of the battery cells 11 and 13 based on the resistance values of the temperature sensors 10a and 10b attached to the respective battery cells 11 and 13.

The battery management apparatus 100 may manage and/or control the state and/or operation of the battery module 10. The battery management apparatus 100 may manage charging and discharging of the battery module 10, or manage the state and/or operation of each of the plurality of battery cells 11, 12, 13, and 14 included in the battery module 10.

Specifically, the battery management apparatus 100 may control the operation of the battery module 10 and/or each of the plurality of battery cells 11, 12, 13, and 14 by monitoring the voltage, current, temperature, and the like of the battery module 10 and/or each of the plurality of battery cells 11, 12, 13, and 14 included in the battery module 10. The battery management apparatus 100 may calculate parameters indicating the state of the battery module 10 and/or the plurality of battery cells 11, 12, 13, and 14, such as a state of charge (SOC) or state of charge (SOH), based on monitoring results.

According to an embodiment, the battery module 10 may include the battery cells 11 and 13 to which the temperature sensors 10a and 10b are attached and the battery cells 12 and 14 to which temperature sensors are not attached. Since the temperature of each of the plurality of battery cells 11, 12, 13, and 14 is an important variable affecting the performance of the battery cells 11, 12, 13, and 14 and the battery module 10 including the battery cells, the battery management apparatus 100 needs to more accurately estimate the temperature of the battery cells 12 and 14 to which the temperature sensor is not attached.

The battery management apparatus 100 may monitor the state of each of the plurality of battery cells 11, 12, 13, and 14 by measuring and/or estimating the temperature of each of the plurality of battery cells 11, 12, 13, and 14. To this end, the battery management apparatus 100 may include a temperature estimation unit 110, a data acquisition unit 120, a temperature correction unit 130, and a memory 140.

The temperature estimation unit 110 may be configured to estimate the temperature of each of the plurality of battery cells 11, 12, 13, and 14. The temperature estimation unit 110 may estimate the temperature of each of the plurality of battery cells 11, 12, 13, and 14 using various internal algorithms.

According to an embodiment, the temperature estimation unit 110 may estimate the temperature of each of the plurality of battery cells 11, 12, 13, and 14 by analyzing electrochemical impedance spectroscopy (EIS) data related to the impedance of each of the plurality of battery cells 11, 12, 13, and 14. Here, a process of measuring the EIS data of each of the plurality of battery cells 11, 12, 13, and 14 may include the operation of measuring the impedance of each of the plurality of battery cells 11, 12, 13, and 14 by applying an AC voltage to the battery module 10.

According to an embodiment, the temperature estimation unit 110 may acquire the EIS data by directly applying voltage and/or current to the battery module 10. In this case, the temperature estimation unit 110 may include various circuits for applying voltage and/or current to the battery module 10 and a processor (not shown) for processing the acquired EIS data.

According to an embodiment, the temperature estimation unit 110 may indirectly acquire the EIS data measured from the battery module 10. In this case, the temperature estimation unit 110 may include various communication circuits and communication modules for wired and/or wireless communication with the battery module 10.

According to an embodiment, the temperature estimation unit 110 may estimate the temperature of each of the plurality of battery cells 11, 12, 13, and 14 based on the EIS data of each of the plurality of battery cells 11, 12, 13, and 14. The internal algorithm for estimating the temperature of each of the plurality of battery cells 11, 12, 13, and 14 based on the EIS data is not limited to a specific example.

The data acquisition unit 120 may acquire measurement data related to the measured temperature of each of the plurality of battery cells 11, 12, 13, and 14. The data acquisition unit 120 may directly and/or indirectly acquire measurement data related to the temperature of each of the plurality of battery cells 11, 12, 13, and 14.

According to an embodiment, the data acquisition unit 120 may be connected to the temperature sensors 10a and 10b to acquire measurement data of the battery cells 11 and 13 to which the temperature sensors 10a and 10b are attached. Here, the measurement data may include data related to the measured temperature of each of the plurality of battery cells 11, 12, 13, and 14. When the temperature sensors 10a and 10b are configured as thermistor temperature sensors, the data acquisition unit 120 may acquire resistance values of each of the temperature sensors 10a and 10b and acquire measurement data related to the measured temperature of each of the battery cells 11 and 13. To this end, the temperature sensors 10a and 10b may each be connected to the data acquisition unit 120 through a channel (Ch).

The temperature correction unit 130 may correct the temperature of each of the plurality of battery cells 11, 12, 13, and 14 estimated by the temperature estimation unit 110 to correspond to the measured temperature of the battery cells 11 and 13 according to the measurement data. Here, the temperature correction unit 130 may correct the estimated temperature of each of the plurality of battery cells 11, 12, 13, and 14 to correspond to the measured temperature of the battery cells 11 and 13 based on at least one correction coefficient.

According to an embodiment, the temperature correction unit 130 may correct the estimated temperature of each of the plurality of battery cells 11, 12, 13, and 14 to correspond to the measured temperature of the battery cells 11 and 13 based on at least one previously stored correction coefficient and/or may calculate and update at least one correction coefficient.

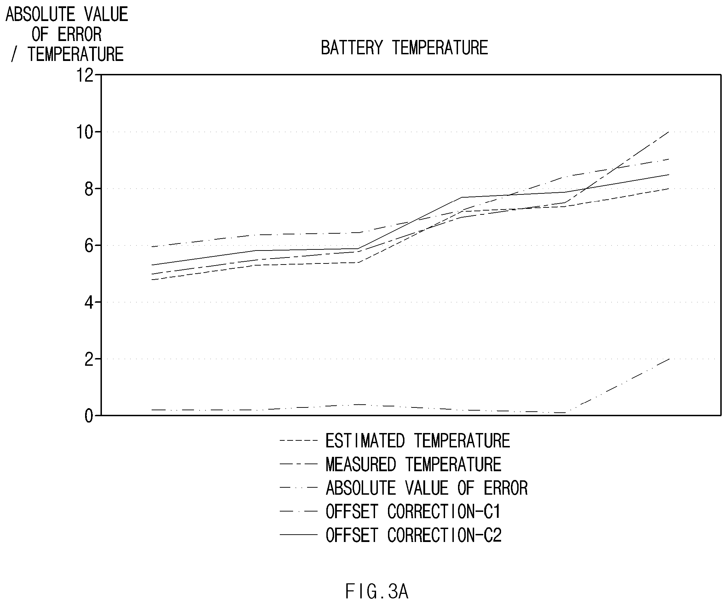

According to an embodiment, the temperature correction unit 130 may perform operations such as offset correction, slope correction, and/or point correction to correct the estimated temperature of each of the plurality of battery cells 11, 12, 13, and 14 to correspond to the measured temperature of the battery cells 11 and 13. That is, the temperature correction unit 130 may correct the estimated temperature of each of the plurality of battery cells 11, 12, 13, and 14 to correspond to the measured temperature of the battery cells 11 and 13 using at least one of an offset correction coefficient for offset correction, a slope coefficient per unit temperature for slope correction, and a point correction coefficient for point correction. The specific details of each correction process are described below in the description of FIGS. 3a to 5b.

According to an embodiment, the temperature correction unit 130 may perform at least two correction operations among the offset correction, the slope correction, and the point correction, and/or may perform the offset correction, the slope correction, and the point correction operations simultaneously.

According to an embodiment, the temperature correction unit 130 may correct the estimated temperature of each of the plurality of battery cells 11, 12, 13, and 14 in each of a plurality of temperature sections to correspond to the measured temperature of the battery cells 11 and 13. To this end, the temperature correction unit 130 may correct the estimated temperature of each of the plurality of battery cells 11, 12, 13, and 14 to correspond to the measured temperature of the battery cells 11 and 13 using the offset correction coefficient, the slope coefficient per unit temperature, and the point correction coefficient corresponding to each of the plurality of temperature sections.

According to an embodiment, the temperature estimation unit 110 and the temperature correction unit 130 may be implemented as one processor or as separate processors. Here, the processor may execute software to control at least one other component (e.g., hardware or software) of the battery management apparatus 100, or perform operations such as processing and/or calculating various data.

The memory 140 may store various data required for the operation of the battery management apparatus 100. For example, the memory 140 may store EIS data of each of the plurality of battery cells 11, 12, 13, and 14, data related to the temperature of each of the plurality of battery cells 11, 12, 13, and 14 estimated based on the EIS data, the offset correction coefficient, the slope coefficient per unit temperature, the point correction coefficient corresponding to each of the plurality of temperature sections, and the like. In addition, the memory 140 may store various commands and the like necessary for the operation of the battery management apparatus 100.

According to an embodiment, the memory 140 may include a volatile memory device such as a static random access memory (SRAM) or a dynamic random access memory (DRAM), or a non-volatile memory device such as a read only memory (ROM), a programmable ROM (PROM), or a flash memory.

Referring to FIG. 1, the memory 140 is illustrated as being included in the battery management apparatus 100, but is not limited thereto, and the memory 140 may be located outside the battery management apparatus 100.

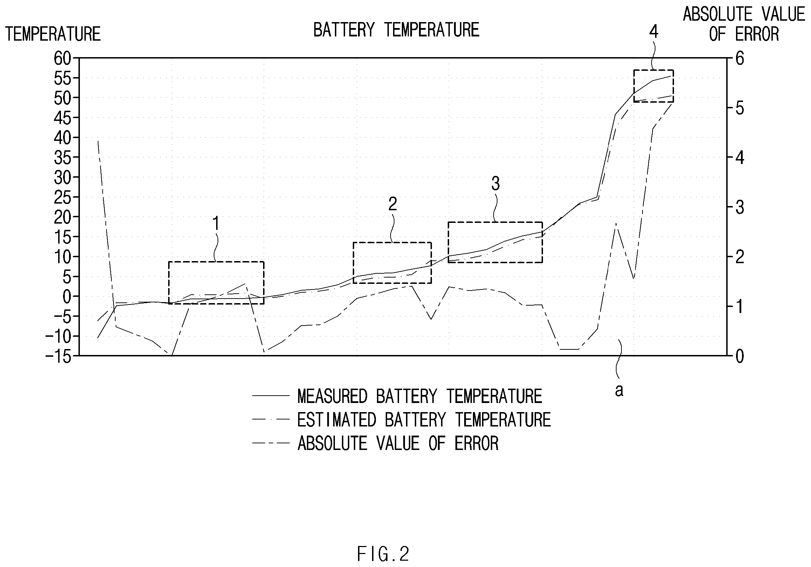

FIG. 2 is a view for describing temperature data according to an embodiment disclosed herein.

Referring to FIG. 2, taking as an example the battery cell 11 to which the temperature sensor 10a is attached among the plurality of battery cells 11, 12, 13, and 14 (refer to FIG. 1), a relationship between the estimated temperature and the measured temperature for the battery cell 11 is illustrated.

According to an embodiment, a vertical axis shown on the left side of a graph shown in FIG. 2 represents temperature (°C), and a vertical axis shown on the right side of the graph represents the size of the absolute value of the error.

Each graph shown in FIG. 2 represents the measured temperature and estimated temperature for the battery cell 11. The measured temperature and estimated temperature of the battery cell 11 corresponding to the same horizontal axis coordinate may constitute one data set. For example, the measured temperature and estimated temperature of the battery cell 11 corresponding to a coordinate of a based on the horizontal axis may correspond to approximately 52 degrees and 50 degrees. This may indicate that the temperature of the battery cell 11 estimated based on the EIS data acquired through EIS analysis of the battery cell 11 is 50 degrees when the measured temperature of the battery cell 11 is 52 degrees.

According to an embodiment, whenever the temperature of the battery cell 11 is measured through the temperature sensor 10a attached to the battery cell 11, an error occurs between the measured temperature of the battery cell 11 and the temperature of the battery cell 11 estimated based on the EIS data acquired through the EIS analysis of the battery cell 11. Referring to the graph showing the absolute value of the error, the absolute value of the error tends to increase when the measured temperature of the battery cell 11 is below zero or exceeds 50 degrees Celsius. In addition, in a specific temperature section (for example, a section where the measured temperature of the battery cell 11 is between about 5 degrees Celsius and 7 degrees Celsius), the absolute value of the error tends to remain at a constant level. That is, since there is a different tendency between the measured temperature of the battery cell 11 and the temperature of the battery cell 11 estimated based on the EIS data acquired through the EIS analysis of the battery cell 11 for each section of the measured temperature of the battery cell 11, the correction coefficient for correcting the estimated temperature of the battery cell 11 to correspond to the measured temperature in each of the plurality of temperature sections may also be different.

According to an embodiment, the temperature correction unit 130 (refer to FIG. 1) may generate a correction coefficient corresponding to each of a plurality of temperature sections 1, 2, 3, and 4, or may correct the estimated temperature of the battery cell 11 to correspond to the measured temperature of the battery cell 11 using the correction coefficient.

According to an embodiment, the temperature correction unit 130 may correct the temperature of the battery estimated through EIS analysis of each of other battery cells, for example, the battery cells 12, 13, and 14 described with reference to FIG. 1, using at least one correction coefficient generated based on the error between the estimated temperature and the measured temperature of the battery cell 11.

The temperature correction unit 130 may correct the estimated temperature of each of the plurality of battery cells 11, 12, 13, and 14 based on a start temperature and an end temperature of each of the plurality of temperature sections 1, 2, 3, and 4 and at least one correction coefficient corresponding to each of the plurality of temperature sections 1, 2, 3, and 4.

For example, referring to FIG. 2, the estimated temperature of the first battery cell 11 at a point where a third section 3 starts may be 10 degrees, and the estimated temperature of the first battery cell 11 at a point where the third section 3 ends may be 14 degrees. Therefore, when a result obtained by the temperature correction unit 130 estimating the temperature of the third battery cell 13 based on the EIS data acquired through the EIS analysis of a battery cell other than the first battery cell 11, for example, the third battery cell 13, is 10 degrees to 14 degrees, the temperature correction unit 130 may correct the estimated temperature of the third battery cell 13 to correspond to the measured temperature of the third battery cell 13 using at least one correction coefficient generated in the third section 3 based on the first battery cell 11.

Referring to FIG. 2, only four sections 1, 2, 3, and 4 are shown, but the embodiment is not limited thereto, and the temperature of the battery cell 11 may be continuously divided to have various numbers and various temperature ranges.

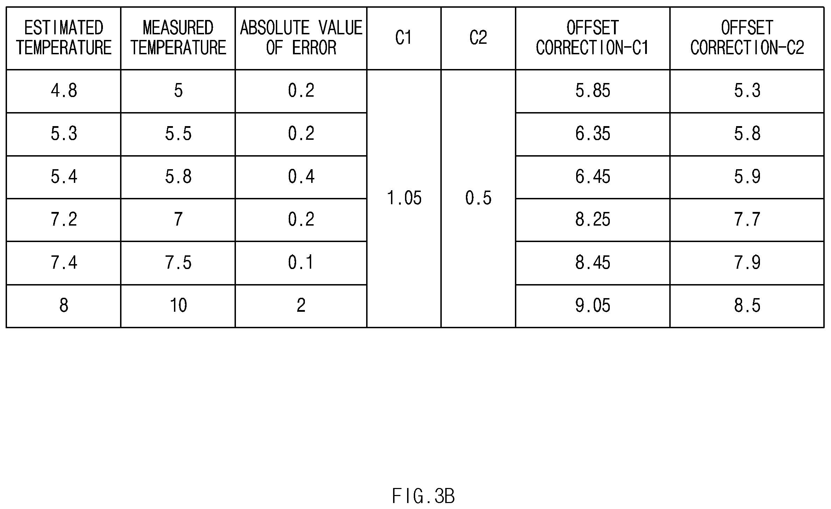

FIGS. 3a and 3b are views for describing offset correction according to an embodiment disclosed herein.

First, referring to FIG. 3a, a graph is shown related to the estimated temperature and the measured temperature of the battery, the absolute value of the error, a temperature of the battery on which offset correction has been performed using a first offset correction coefficient C1, and a temperature of the battery on which offset correction has been performed using a second offset correction coefficient C2. The graph shown in FIG. 3a may correspond to any one of the plurality of temperature sections described with reference to FIG. 2, and does not correspond to a specific temperature section.

According to an embodiment, the graph shown in FIG. 3a may be a graph related to the temperature of the battery cell 11. The temperature correction unit 130 (refer to FIG. 1) may calculate the first offset correction coefficient C1 and/or the second offset correction coefficient C2 based on the graph shown in FIG. 3a.

The offset correction may be a correction that adds or subtracts the same offset correction coefficient to or from each estimated temperature of the battery cell 11. According to an embodiment, the offset correction coefficient may be determined based on the absolute value of the error between the estimated temperature of the battery cell 11 and the measured temperature of the battery cell 11.

Referring to FIG. 3b, data related to the estimated temperature of the battery cell 11 and the measured temperature of the battery cell 11 shown in FIG. 3a are shown. According to an embodiment, the temperatures of the battery cell 11 acquired through the temperature sensor 10a attached to the battery cell 11 may be 5 degrees, 5.5 degrees, 5.8 degrees, 7 degrees, 7.5 degrees, and 10 degrees, respectively, and at the same time, the temperatures of the battery cell 11 estimated based on the EIS data acquired through the EIS analysis of the battery cell 11 may be 4.8 degrees, 5.3 degrees, 5.4 degrees, 7.2 degrees, 7.4 degrees, and 8 degrees, respectively. However, only six pieces of data are shown in FIG. 3b, but the embodiment is not limited thereto, and data related to the estimated temperature and measured temperature of the battery cell 11 corresponding to each of various temperature intervals may be further included.

According to an embodiment, the error between the estimated temperature of the battery cell 11 and the measured temperature of the battery cell 11 may be defined as a value obtained by subtracting the estimated temperature of the battery cell 11 from the measured temperature of the battery cell 11. That is, the errors between the estimated temperature of the battery cell 11 and the measured temperature of the battery cell 11 may be 0.2 degrees, 0.2 degrees, 0.4 degrees, -0.2 degrees, 0.1 degrees and 2 degrees, respectively. Therefore, absolute values of the errors between the estimated temperature of the battery cell 11 and the measured temperature of the battery cell 11 may be 0.2 degrees, 0.2 degrees, 0.4 degrees, 0.2 degrees, 0.1 degrees and 2 degrees, respectively.

According to an embodiment, the offset correction coefficient C1 may correspond to a median value of the absolute values of the errors of the battery cell 11. That is, the temperature correction unit 130 may identify a maximum value and a minimum value among the absolute values of the errors of the battery cell 11 and determine the median value of the identified maximum and minimum values as the offset correction coefficient C1. In this case, the offset correction coefficient C1 may be set to 1.05, which is a median value between 2, which is the maximum absolute value of the errors, and 0.1, which is the minimum absolute value of the errors.

According to an embodiment, according to an embodiment, the offset correction coefficient C2 may correspond to an average value of the absolute values of the errors of the battery cell 11. That is, the temperature correction unit 130 may calculate the sum of each of absolute values of the errors of the battery cell 11 (0.2+0.2+0.4+0.2+0.1+2) and calculate the average of the absolute values to determine the average value as the offset correction coefficient C2. In this case, the offset correction coefficient C2 may be the average value of 0.5.

The error correction unit 130 may perform the offset correction by adding or subtracting the calculated offset correction coefficient C1 or C2 to or from the estimated temperature of the battery cell 11. Here, since the estimated temperature of the battery cell 11 is smaller than the measured temperature of the battery cell 11, the error correction unit 130 may perform the offset correction by adding the offset correction coefficient C1 to the estimated temperature of the battery cell 11. Since the offset correction coefficient C1 or C2 is calculated based on the absolute value of the error of the battery cell 11, the offset correction coefficient C1 or C2 has a positive value all the time.

According to an embodiment, the error correction unit 130 may correct the error of the estimated temperature of the battery cell 11 by adding the offset correction coefficient C1 to the estimated temperature of the battery cell 11. Accordingly, the temperature of the battery cell 11 that has undergone the offset correction C1 may be 5.85 degrees, 6.35 degrees, 6.45 degrees, 8.25 degrees, 8.45 degrees, and 9.05 degrees, respectively.

According to an embodiment, the error correction unit 130 may correct the error of the estimated temperature of the battery cell 11 by adding the offset correction coefficient C2 to the estimated temperature of the battery cell 11. Accordingly, the temperatures of the battery cell 11 that has undergone the offset correction C2 may be 5.3 degrees, 5.8 degrees, 5.9 degrees, 7.7 degrees, 7.9 degrees, and 8.5 degrees, respectively.

The error correction unit 130 may determine whether to perform the offset correction using a certain offset correction coefficient in the corresponding section based on the temperature of the battery cell 11 corrected based on each offset correction coefficient C1 or C2 and the measured temperature of the battery cell 11. For example, the error correction unit 130 may calculate a root mean square error (RMSE), mean absolute error, or the like based on the error between the temperature of the battery cell 11 corrected based on each offset correction coefficient C1 or C2 and the measured temperature of the battery cell 11, and may determine to perform the offset correction using the offset correction coefficient with a small error, but the embodiment is not limited to this example.

The error correction unit 130 may store the offset correction coefficients C1 and C2 and a start temperature and an end temperature of the corresponding temperature section in the memory 140 (refer to FIG. 1). When the error correction unit 130 estimates the temperature of the battery cells 12, 13, and 14 based on the EIS data acquired through the EIS analysis of the battery cell 11 and the other battery cells 12, 13, and 14 based on the start temperature, the end temperature, and the offset correction coefficients C1 and C2 of the temperature section, the estimated temperature of the battery cells 12, 13, and 14 may be corrected using the offset correction coefficient C1 or C2 generated in the process of correcting the temperature of the battery cell 11.

According to an embodiment, when the temperature of a second battery cell 12 estimated based on EIS data acquired through EIS analysis of the second battery cell 12 to which the temperature sensor is not attached is 8 degrees, the temperature correction unit 130 may reflect the offset correction coefficient generated in the process of correcting the temperature of the first battery cell 11 in the estimated temperature of the second battery cell 12. That is, when the estimated temperature of the second battery cell 12 is 8 degrees, the temperature correction unit 130 may perform the offset correction to correct the estimated temperature of the second battery cell 12 to 9.05 degrees or 8.5 degrees.

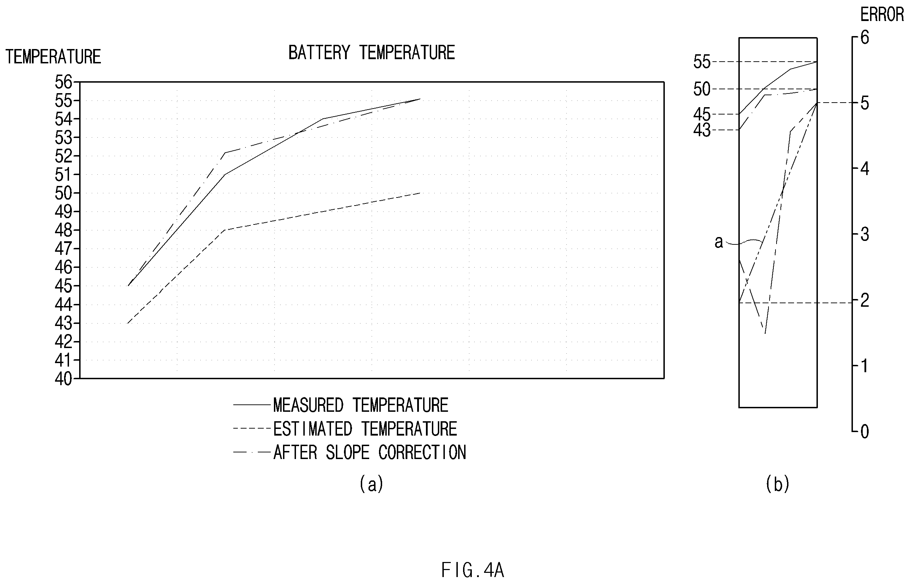

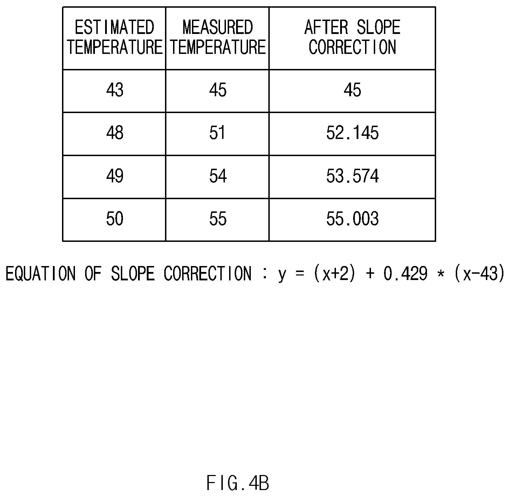

FIGS. 4a and 4b are views for describing slope correction according to an embodiment disclosed herein.

First, referring to FIG. 4a, a graph (a) related to the estimated temperature and the measured temperature of the battery, and the temperature of the battery after performing slope correction is shown on the left. The graph (a) shown in FIG. 4a may correspond to any one of the plurality of temperature sections described with reference to FIG. 2, and does not correspond to a specific temperature section. In addition, for convenience of description, the temperature section corresponding to the graph (a) shown in FIG. 4a assumes that the estimated temperature of the battery cell 11 is between 43 degrees and 50 degrees.

In addition, the graph (b) shown in FIG. 4a is a graph showing the error of the graph (a) shown on the left. The slope correction may be a correction that reflects a slope of a straight line a having an average rate of change of the error in the graph (b) shown on the right.

According to an embodiment, the graph shown in FIG. 4a may be a graph related to the temperature of the battery cell 11. The temperature correction unit 130 (refer to FIG. 1) may calculate a slope correction coefficient based on the graph shown in FIG. 4a and generate an equation for correcting the estimated temperature of the battery cell 11 based on the calculated slope correction coefficient.

The slope correction may be a correction that substitutes the estimated temperature of the battery cell 11 into the generated equation so that the estimated temperature of the battery cell 11 corresponds to the measured temperature of the battery cell 11. According to an embodiment, the equation generated based on the slope correction coefficient may be in the form of a linear function (y=ax+b, where a is a non-zero real number), but is not limited to this example.

According to an embodiment, the equation for correcting the estimated temperature of the battery cell 11 may be a linear function where the slope correction coefficient is taken as a slope. Referring to FIG. 4b, data related to the estimated temperature of the battery cell 11 and the measured temperature of the battery cell 11 shown in FIG. 4a are shown. According to an embodiment, the temperatures of the battery cell 11 acquired through the temperature sensor 10a attached to the battery cell 11 may be 45 degrees, 51 degrees, 54 degrees, and 55 degrees, respectively, and at the same time, the temperatures of the battery cell 11 estimated based on the EIS data acquired through the EIS analysis for the battery cell 11 may be 43 degrees, 48 degrees, 49 degrees, and 50 degrees, respectively. In FIG. 4b, only four items of data are shown, but the embodiment is not limited thereto, and may further include data related to the estimated temperature and measured temperature of the battery cell 11 corresponding to each of various temperature sections.

According to an embodiment, the error between the estimated temperature of the battery cell 11 and the measured temperature of the battery cell 11 may be defined as a value obtained by subtracting the estimated temperature of the battery cell 11 from the measured temperature of the battery cell 11. That is, the error between the estimated temperature of the battery cell 11 and the measured temperature of the battery cell 11 may be 2 degrees, 3 degrees, 5 degrees, and 5 degrees, respectively.

According to an embodiment, the slope correction coefficient may be determined based on the errors between the measured temperatures and the estimated temperatures of the battery cell 11 at a start point and an end point of each corresponding temperature section. For example, when the temperature section set based on the estimated temperature of the battery cell 11 as shown in FIG. 4b is between 43 degrees and 50 degrees, the slope correction coefficient may be determined based on the error when the estimated temperature of the battery cell 11 is 43 degrees and the error when the estimated temperature of the battery cell 11 is 50 degrees.

According to an embodiment, the slope correction coefficient may correspond to an average rate of change of the error between the measured temperature and the estimated temperature of the battery cell 11 at each of the start point and the end point in the corresponding temperature section. Since the error at a point where the estimated temperature of the battery cell 11 is 43 degrees is 2 degrees, and the error at a point where the estimated temperature of the battery cell 11 is 50 degrees is 5 degrees, the slope correction coefficient may be 0.429, which is a value obtained by dividing the rate of change between the errors, 3 degrees (5 degrees - 2 degrees), by a length of the temperature section (50 degrees - 43 degrees).

According to an embodiment, the estimated temperature of the battery cell 11 at the start point of each of the plurality of temperature sections may be corrected to correspond to the measured temperature of the battery cell 11. For example, the temperature of 43 degrees, which is a start point of a temperature section (between 43 degrees and 50 degrees) provided by being divided based on the estimated temperature of the battery cell 11, may be corrected to be 45 degrees. That is, the equation generated based on the slope correction coefficient may pass through a point corresponding to the measured temperature of the battery cell 11 at the start point of each of the plurality of temperature sections.

The equation generated based on the above is as follows.
Y = (X+2) + 0.429*(X-43) (where Y corresponds to the temperature at which the slope correction is performed on the estimated temperature of the battery cell 11,and X corresponds to the estimated temperature of the battery cell 11 and is a real number between 43 and 50.)

The temperature correction unit 130 (refer to FIG. 1) may correct the estimated temperature of the battery cell 11 to correspond to the measured temperature of the battery cell 11 by substituting each estimated temperature of the battery cell 11 into the equation. That is, the temperatures of the battery cell 11 on which the slope correction is performed by substituting each of the estimated temperatures of the battery cell 11 of 43 degrees, 48 degrees, 49 degrees, and 50 degrees into the equation may be 45 degrees, 52.145 degrees, 53.574 degrees, and 55.003 degrees, respectively.

The error correction unit 130 may store the errors of the battery cell 11 at the start point and the end point of each of the plurality of temperature sections, the slope correction coefficients, and the equation generated based on the slope correction coefficients in the memory 140 (refer to FIG. 1). When the error correction unit 130 estimates the temperatures of the battery cells 12, 13, and 14 based on the EIS data acquired through the EIS analysis of the battery cell 11 and other battery cells 12, 13, and 14 based on the equation for each of the plurality of temperature sections, the estimated temperatures of the battery cells 12, 13, and 14 may be corrected using the equation generated in the process of correcting the temperature of the battery cell 11.

According to an embodiment, when the temperature of the second battery cell 12 estimated based on EIS data acquired through EIS analysis of the second battery cell 12 to which the temperature sensor is not attached is 45 degrees, the temperature correction unit 130 may correct the temperature of the second battery cell 12 by substituting the estimated temperature of the second battery cell 12 into the equation coefficient generated in the process of correcting the temperature of the first battery cell 11. That is, when the estimated temperature of the second battery cell 12 is 45 degrees, the temperature correction unit 130 may perform the slope correction to correct the estimated temperature of the second battery cell 12 to 47.858 degrees.

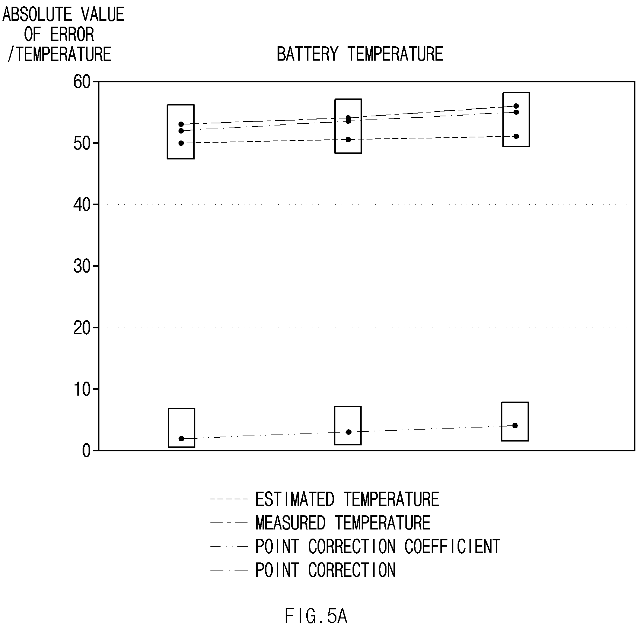

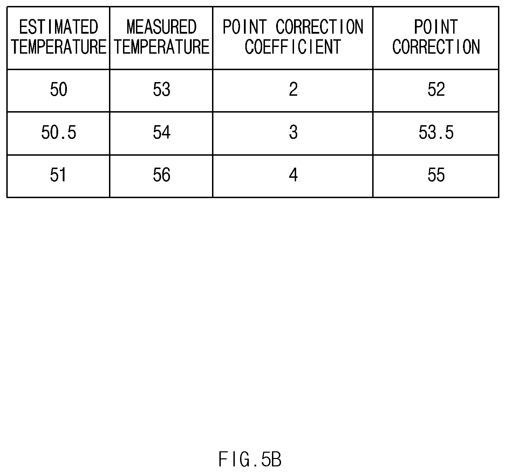

FIGS. 5a and 5b are views for describing point correction according to an embodiment disclosed herein.

First, referring to FIG. 5a, a graph is shown related to the estimated temperature and the measured temperature of the battery, the point correction coefficient, and the temperature of the battery on which point correction is performed using the point correction coefficient. The graph shown in FIG. 5a may correspond to any one of the plurality of temperature sections described with reference to FIG. 2, and does not correspond to a specific temperature section.

According to an embodiment, referring to the graph showing the absolute value of the error as shown in FIG. 2, the absolute value of the error tends to increase when the measured temperature of the battery cell 11 (refer to FIG. 1) is below zero or exceeds 50 degrees Celsius. That is, when the temperature of the battery cell 11 enters a specific section, there are cases where the absolute value of the error is not constant. In this section, since it is difficult to ensure accuracy when correcting the error between the estimated temperature and the measured temperature of the battery cell 11 when performing the offset correction described with reference to FIGS. 3a and 3b, the error correction unit 130 may perform the point correction by adding a previously stored point correction coefficient to the estimated temperature of the battery cell 11 when the estimated temperature of the battery cell 11 reaches a specific temperature point.

Referring to FIG. 5b, data related to the estimated temperature of the battery cell 11 and the measured temperature of the battery cell 11 shown in FIG. 5a are shown. According to an embodiment, the temperatures of the battery cell 11 acquired through the temperature sensor 10a attached to the battery cell 11 may be 53 degrees, 54 degrees, and 56 degrees, respectively, and at the same time, the temperatures of the battery cell 11 estimated based on the EIS data acquired through the EIS analysis of the battery cell 11 may be 50 degrees, 50.5 degrees, and 51 degrees, respectively.

According to an embodiment, the temperature correction unit 130 may perform point correction based on the estimated temperature of the battery cell 11 stored in advance and the point correction coefficient corresponding thereto. For example, when the point correction coefficient is 2 when the estimated temperature of the battery cell 11 is 50 degrees, the temperature correction unit 130 may perform the point correction by adding the point correction coefficient to the estimated temperature. The point correction coefficient may represent one value corresponding to each specific temperature value. Similarly, the temperature correction unit 130 may perform the point correction by adding the point correction coefficient to each estimated temperature of the battery cell 11, and the result may correspond to 52 degrees, 53.5 degrees, and 55 degrees.

Since it is difficult to position a temperature sensor in each of the battery cells 11, 12, 13, and 14 in order to increase the energy density within the battery pack, the temperature of each battery cells 11, 12, 13, and 14 has to be estimated. However, as described above, there are errors between the temperatures estimated based on the EIS data acquired through the EIS analysis of the plurality of battery cells 11, 12, 13, and 14 and the actually measured temperatures of the battery cells 11, 12, 13, and 14. Therefore, there is a need to correct the estimated temperatures of the battery cells 11, 12, 13, and 14 to more accurately estimate the temperatures of the battery cells 11, 12, 13, and 14. Currently, since for the algorithm for estimating the temperatures of the battery cells 11, 12, 13, and 14 through the EIS analysis, there is a possibility that errors between the measured temperatures of the battery cells 11, 12, 13, and 14 may vary due to various variables (e.g., the state of charge (SOC), humidity, pressure, degree of degradation, or the like), correcting the temperatures of battery cells 11, 12, 13, and 14 using a fixed correction coefficient is inefficient. Accordingly, the battery management apparatus 100 (refer to FIG. 1) according to an embodiment disclosed herein may calculate and update various correction coefficients when performing the EIS analysis of the battery cells 11, 12, 13, and 14, and may increase the accuracy of temperature estimation by enabling more flexible setting of correction coefficients.

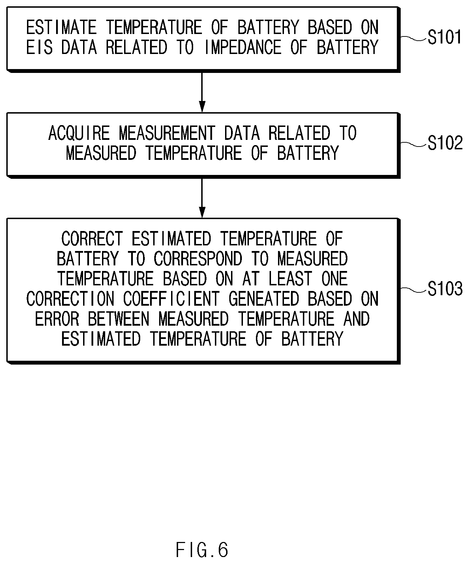

FIG. 6 is a flowchart for describing the operation of the battery management apparatus according to an embodiment disclosed herein.

In step S101, the battery management apparatus 100 (refer to FIG. 1) may estimate temperatures of the battery cells 11, 12, 13, and 14 based on EIS data related to the impedances of the battery cells 11, 12, 13, and 14, respectively. Here, the internal algorithm for estimating the temperature of each of the plurality of battery cells 11, 12, 13, and 14 based on EIS data is not limited to a specific example.

In step S102, the battery management apparatus 100 may acquire measurement data related to the measured temperatures of the battery cells 11 and 13.

According to an embodiment, the temperature sensors 10a and 10b may be attached to at least one battery cell 11 or 13, respectively, among the battery cells 11, 12, 13, and 14. When the temperature sensors 10a and 10b are constructed as thermistor temperature sensors, the battery management apparatus 100 may acquire resistance values of each of the temperature sensors 10a and 10b and acquire measurement data related to the measured temperature of each of the battery cells 11 and 13. To this end, the temperature sensors 10a and 10b may each be connected to the battery management apparatus 100 through a channel (Ch).

In step S103, the battery management apparatus 100 may correct the estimated temperatures of the battery cells 11, 12, 13, and 14 to correspond to the measured temperatures of the battery cells 11 and 13 using at least one correction coefficient generated based on the error between the measured temperatures of the battery cells 11 and 13 and the estimated temperatures.

According to an embodiment, the step of correcting the estimated temperature of the battery cells 11, 12, 13, and 14 to correspond to the measured temperature of the battery cells 11 and 13 may include a step of dividing data related to the estimated temperature of the battery cells 11, 12, 13, and 14 into a plurality of temperature sections and a step of correcting the estimated temperature of the battery cells 11, 12, 13, and 14 to correspond to the measured temperature of the battery cells 11 and 13 using a correction coefficient corresponding to each of the plurality of temperature sections.

According to an embodiment, the battery management apparatus 100 may perform the offset correction by adding or subtracting to or from the estimated temperature of the battery cells 11, 12, 13, and 14 in each of the plurality of temperature sections using an offset correction coefficient, which is one of at least one correction coefficient corresponding to each of the plurality of temperature sections. Here, the offset correction coefficient may be determined based on absolute values of the errors between the measured temperatures and the estimated temperatures of the battery cells 11, 12, 13, and 14 in each of the plurality of temperature sections, and may correspond to, for example, an average value or a median value of the absolute values of the errors, but is not limited thereto.

According to an embodiment, the battery management apparatus 100 may perform the slope correction on each of the estimated temperatures of the battery cells 11, 12, 13, and 14 in each of the plurality of temperature sections using an equation generated based on a slope correction coefficient, which is one of at least one correction coefficient corresponding to each of the plurality of temperature sections. Here, the slope correction coefficient may be determined based on the error between the measured temperature and the estimated temperature of the battery cell 11 at a start point and an end point of each of the plurality of temperature sections, and may correspond to the average rate of change of the error between the temperatures at each of the start point and the end point.

According to an embodiment, the battery management apparatus 100 may calculate the slope correction coefficient by multiplying the slope coefficient per unit temperature by each of the errors between the measured temperatures and the estimated temperature of the battery cells.

In the above, all components constituting the embodiments have been described as being combined as one or operating in combination, but are not necessarily limited to such embodiments, and within the scope of the purpose, all components may be selectively combined as one or more and operated. In addition, terms such as "include," "comprise," or "have" described above mean that the corresponding component can be present unless otherwise stated, and thus it should be construed that other components may be further included rather than excluding other components.

The above description is merely an example of the technical idea disclosed herein, and those with ordinary skill in the art to which the embodiments disclosed herein belong may make various modifications and variations without departing from the essential characteristics of the embodiments disclosed herein.

Accordingly, the embodiments disclosed herein are not intended to limit the technical ideas disclosed herein but rather to explain them, and the scope of the technical ideas disclosed herein is not limited by these embodiments. The scope of protection disclosed herein should be interpreted by the accompanying claims, and all technical ideas within the scope equivalent thereto should be construed as being included in the scope of rights herein.

### (Reference Signs List)

| | | | |
|---|---|---|---|
| 10: | Battery module | 11, 12, 13, 14: | Battery cell |
| 10a, 10b: | Temperature sensor | 100: | Battery management apparatus |
| 110: | Temperature estimation unit | 110: | Data acquisition unit |
| 130: | Temperature correction unit | 140: | Memory |

## Claims

1. A battery management apparatus comprising:
a temperature estimation unit configured to estimate a temperature of a battery based on electrochemical impedance spectroscopy (EIS) data related to impedance of the battery;
a data acquisition unit configured to acquire measurement data related to a measured temperature of the battery; and
a temperature correction unit configured to correct the estimated temperature of the battery to correspond to the measured temperature of the battery based on at least one correction coefficient generated based on an error between the measured temperature of the battery according to the measurement data and the estimated temperature of the battery.

2. The battery management apparatus of claim 1, wherein the temperature correction unit corrects the estimated temperature of the battery to correspond to the measured temperature of the battery using a correction coefficient corresponding to each of a plurality of temperature sections.

3. The battery management apparatus of claim 2, wherein the temperature correction unit corrects the estimated temperature of the battery to correspond to the measured temperature of the battery by performing offset correction by adding or subtracting to or from the estimated temperature of the battery in each of the plurality of temperature sections, an offset correction coefficient that is one of at least one correction coefficient corresponding to each of the plurality of temperature sections.

4. The battery management apparatus of claim 3, wherein the offset correction coefficient is determined based on an absolute value of an error between the estimated temperature of the battery and the measured temperature of the battery in each of the plurality of temperature sections.

5. The battery management apparatus of claim 4, wherein the offset correction coefficient corresponds to an average value of the absolute values of the errors in each of the plurality of temperature sections.

6. The battery management apparatus of claim 4, wherein the offset correction coefficient corresponds to a median value of the absolute values of the errors in each of the plurality of temperature sections.

7. The battery management apparatus of claim 2, wherein the temperature correction unit corrects the estimated temperature of the battery to correspond to the measured temperature of the battery by substituting the estimated temperature of the battery into an equation generated based on a slope correction coefficient that is one of the at least one correction coefficient corresponding to each of the plurality of temperature sections.

8. The battery management apparatus of claim 7, wherein the equation is a linear function where an average rate of change of the error between the measured temperature of the battery and the estimated temperature of the battery at each of a start point and an end point of each of the plurality of temperature sections is taken as a slope.

9. The battery management apparatus of claim 8, wherein the estimated temperature of the battery at the start point of each of the plurality of temperature sections is corrected to correspond to the measured temperature of the battery.

10. The battery management apparatus of claim 1, wherein the temperature correction unit corrects the estimated temperature of the battery to correspond to the measured temperature of the battery using a point correction coefficient that is one of the at least one correction coefficient, when the estimated temperature of the battery corresponds to a preset temperature.

11. A method of operating a battery management apparatus, comprising:
estimating a temperature of a battery based on electrochemical impedance spectroscopy (EIS) data related to impedance of the battery;
acquiring measurement data related to a measured temperature of the battery; and
correcting the estimated temperature of the battery to correspond to the measured temperature of the battery based on at least one correction coefficient generated based on an error between the measured temperature of the battery according to the measurement data and the estimated temperature of the battery.

12. The method of claim 11, wherein the correcting of the estimated temperature of the battery to correspond to the measured temperature of the battery includes:
dividing data related to the estimated temperature of the battery into a plurality of temperature sections; and
correcting the estimated temperature of the battery to correspond to the measured temperature of the battery using a correction coefficient corresponding to each of the plurality of temperature sections.

13. The method of claim 12, wherein the correcting of the estimated temperature of the battery to correspond to the measured temperature of the battery includes performing offset correction by adding or subtracting to or from the estimated temperature of the battery in each of the plurality of temperature sections, an offset correction coefficient that is one of at least one correction coefficient corresponding to each of the plurality of temperature sections, and
the offset correction coefficient is determined based on an absolute value of an error between the estimated temperature of the battery and the measured temperature of the battery in each of the plurality of temperature sections.

14. The method of claim 13, wherein the offset correction coefficient corresponds to an average value or a median value of the absolute values of the errors in each of the plurality of temperature sections.

15. The method of claim 12, wherein the correcting of the estimated temperature of the battery to correspond to the measured temperature of the battery includes:
generating an equation based on a slope correction coefficient that is one of the at least one correction coefficient corresponding to each of the plurality of temperature sections; and
correcting the estimated temperature of the battery to correspond to the measured temperature of the battery by substituting the estimated temperature of the battery into the equation.

16. The method of claim 15, wherein the equation corresponds to a linear function where an average rate of change of the error between the measured temperature of the battery and the estimated temperature of the battery at each of a start point and an end point of each of the plurality of temperature sections is taken as a slope, and
the estimated temperature of the battery at the start point of each of the plurality of temperature sections is corrected to correspond to the measured temperature of the battery.
